## Europäisches Patentamt
## European Patent Office
## Office européen des brevets

(11) Veröffentlichungsnummer: **0 172 527**
**B1**

(12) # EUROPÄISCHE PATENTSCHRIFT

(45) Veröffentlichungstag der Patentschrift:
**12.07.89**

(51) Int. Cl.⁴: **C 08 F 212/12 //**
**(C08F212/12, 220:44)**

(21) Anmeldenummer: **85110193.1**

(22) Anmeldetag: **14.08.85**

(54) **Copolymerisate aus Alpha-Methylstyrol und Acrylnitril.**

(30) Priorität: **24.08.84 DE 3431194**

(43) Veröffentlichungstag der Anmeldung:
**26.02.86 Patentblatt 86/9**

(45) Bekanntmachung des Hinweises auf die Patenterteilung:
**12.07.89 Patentblatt 89/28**

(84) Benannte Vertragsstaaten:
**DE FR GB IT NL**

(56) Entgegenhaltungen:
**EP-A-0 041 703**
**DE-A-3 128 370**

(73) Patentinhaber: **BAYER AG, D-5090 Leverkusen 1 Bayerwerk (DE)**

(72) Erfinder: **Zabrocki, Karl, Dr., Edelfalter 33, D-4044 Büttgen (DE)**
Erfinder: **Fritz, Rainer, Dr., Fliederweg 136, D-5000 Köln 40 (DE)**
Erfinder: **Pischtschan, Alfred, Dr., Zur Eiche 33, D-5067 Kürten (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Copolymerisate aus α-Methylstyrol und Acrylnitril werden zur Herstellung wärmeformbeständiger thermoplastischer Formmassen z. B. vom ABS-Typ oder von Mischungen z. B. aus ABS mit Polyvinylchlorid, Polycarbonat oder Polyestern verwendet.

Man stellt sie meist durch Emulsionspolymerisation her, bei der das Monomergemisch einer Radikal-Initiator und Emulgator enthaltenden wäßrigen Flotte zugeführt und bei Temperaturen zwischen 40 und 80°C polymerisiert wird. Weil man so die Polymerisationswärme leicht abführen kann, dosiert man insbesondere bei großtechnischer Produktiom das Monomergemisch über mehrere Stunden zu.

Für wärmeformbeständige Thermoplasten geeignete α-Methylstroyl/Acrylnitril -Harze - im folgenden "AMS-Harze" enthalten in der Regel 65 - 80 Gew.-% α-Methylstyrol und 35 - 20 Gew.-% Acrylnitril einpolymerisiert. Stellt man diese Harze durch übliche Emulsionspolymerisation her, so erhält man Produkte, die selektiv hohe Anteile an miteinander verbundenen Acrylnitril-Einheiten, im folgenden als Acn-Sequenzen bezeichnet, besitzen. Diese haben den Nachteil, daß sie die Glastemperatur des Copolymeren und damit die wärmeformbeständigkeit des mit ihm hergestellten Werkstoffs erniedrigen sowie bei höheren Verarbeitungstemperaturen, z. B. 240 - 300°C, stark verfärben.

Aus EP-A-0 041 703 ist ein Verfahrem bekannt, bei dem durch Einhalten bestimmter Konzentrationen an Acrylnitril im Reaktionsgemisch restmonomerenarme Produkte mit geringer thermischer Verfärbung erhalten werden. Diese AMS-Harze zeigen jedoch in Kombination mit Pfropfkautschuken nur mäßige Zähigkeit; bei hohen Verarbeitungstemperaturen bilden sich Oberflächenstörungen (siehe Vergleichsversuche a und b).

In der DE-OS-3 128 370 ( = GB-PS-2 101 143) ist eim Verfahren zur Herstellung von AMS-Harzen beschrieben, bei dem nicht verfärbende und wärmeformbeständige Harze erhalten werden, indem man das Molverhältnis von α-Methylstyrol : Acrylnitril bis zu einem Umsatz von 90 % bei 1,3 : 1 bis 3,0 : 1 hält. Aber die Polymerisation hört bei etwa 97 % Umsatz auf, so daß große Mengen an Restmonomeren verbleiben; Mischungen mit Pfropfkautschuk (siehe Vergleichsbeispiele c und d) haben unzureichende Kältezähigkeit.

Erfindungsgemäß werden AMS-Harze mit kleinen Anteilen an ACRYLNITRIL-Sequenzen hergestellt, die zu Thermoplasten mit gleichzeitig großer Wärmeformbeständigkeit, zähigkeit bei +20°C und -40°C und Verspritzbarkeit sowie geringer Verfärbungsneigung verarbeitet werden können und bei deren Herstellung in Emulsion Umsätze > 97 % sowie niedrige Restmonomergehalte erreicht werden.

Gegenstand der Erfindung ist ein Verfahren zur Herstellung von Copolymerisaten aus 65 bis 75 Gew.-% α-Methylstyrol und 35 bis 25 Gew.-% Acrylnitril durch radikalische Emulsionspolymerisation, bei der die Monomeren während der Polymerisation zudosiert werden, das dadurch gekennzeichnet ist, daß das Verhältnis

mol α-Methylstyrol/mol Acrylnitril

der im Reaktionsgemisch befindlichen, nicht umgesetzten Monomeren während der Dosierphase zwischen 0,7 und 1,25 gehalten wird, sowie die Verwendung von so hergestellten Copolymerisaten zur Herstellung thermoplastischer Formmassen, insbesondere von ABS-Formmassen.

**Das Polymerisationsverfahren**

Prinzipiell sind alle zur Emulsionspolymerisation bekannten Techniken zur Herstellung der erfindungsgemäßen Copolymerisate geeignet. Als besonders günstig hat sich folgendes Vorgehen herausgestellt:

Eine wäßrige Flotte wird in einer Menge von 150 - 300 Gew.-% (bezogen auf die zu polymerisierende Monomermenge) vorgelegt; sie enthält das Emulgiersystem sowie gegebenenfalls den Initiator und einen Regler.

Nach Erwärmen dieser Flotte auf die gewünschte Polymerisationstemperatur (30 - 90°C, vorzugsweise 60 - 80°C) gibt man in 4 - 7 Stunden die Monomeren zu, setzt gegebenenfalls weiteren Initiator nach und läßt ausreagieren. Der erhaltene Harzlatex wird, gegebenenfalls nach Mischen mit weiteren Polymer-Latices sowie gegebenenfalls nach Zusatz von Zuschlagstoffen auf bekannte Weise koaguliert, gewaschen, getrocknet und thermoplastisch weiter verarbeitet.

Als Emulgatoren können die für Emulsionspolymerisationen gebräuchlichen, vorzugsweise anionische, eingesetzt werden, z. B. Harzseifen, Fettsäure-Seifen, Acrylsulfonate, Aralkylsulfonate, Alkylsulfonate, Aralkyl-Carboxylate, Alkylsulfate; Harzseifen und $C_{12}$-$C_{18}$-Alkylsulfonate sind besonders geeignet.

Die Initiatoren sind bevorzugt wasserlösliche z. B. Persulfate, Perphosphate und Redox-Systeme. Redox-Systeme auf Basis organischer Verbindungen können auch in der Monomerlösung gelöst zugegeben werden. Beispiele für Initiatoren sind $K_2S_2O_8$, $(NH_4)_2S_2O_8$, die Redox-Systeme Cumolhydroperoxid/Fe++/Rongalit, p-Methanhydroperoxid/Fe++/ Rongalit, Diisopropylbenzolhydroperoxid/Fe++/Ascorbinsäure.

Als Regler zur Einstellung der Molgewichte benutzt man meistens organische Schwefelverbindungen wie Mercaptane und Disulfide, wobei langkettige Mercaptane, z. B. n- und tert.-Dodecylmercaptan bevorzugt sind. Die Regler werden zweckmäßig im Monomergemisch gelöst.

Emulgatoren, Initiatoren und Regler können ebenfalls in der wäßrigen Flotte vorgelegt oder auch separat als weitere Zuläufe während der Polymerisationszeit dosiert werden.

Die Reaktionstemperatur richtet sich in erster Linie nach dem Intitiator und nach den technischen

2

Möglichkeiten zur Abfuhr der Polymerisationswärme. Redoxaktivierte Systeme polymerisieren bereits bei etwa 30 - 50°C, während persulfataktivierte Systeme Temperaturen zwischen 65 und 80°C benötigen.

Nach dem erfindungsgemäßen Verfahren durchgeführte Emulsionspolymerisationen erreichen Umsätze von > 97 %, in der Regel > 98 %; die erhaltenen Polymeren besitzen niedrige Restmonomergehalte.

## Die Monomeren

Erfindungsgemäß ist das Gewichtsverhältnis der insgesamt zudosierten Monomeren α-Methylstyrol und Acrylnitril 65 : 35 bis 75 : 25. Die Monomeren können einzeln oder als gemeinsame Lösung dem Reaktionsgemisch zugeführt werden, wobei die gleichmäßige Zugabe über einen Zeitraum von 4 - 7 Stunden bevorzugt ist. Wesentlich im Sinne der vorliegenden Erfindung ist, daß die Dosiergeschwindigkeit, das Mengenverhältnis der zugegebenen Monomeren und die Abreaktion der Monomeren in der Emulsion so aufeinander abgestimmt sind, daß das Molverhältnis

$$\frac{(mol\ \alpha\text{-Methylstyrol})}{(mol\ Acrylnitril)}$$

der nicht umgesetzten Monomeren während der gesamten Dosierzeit zwischen 0,7 und 1,25 liegt. Ist das Molverhältnis kleiner, erhält man thermisch instabile, vergilbende Produkte; ist es größer, so steigen die Restmonomergehalte stark an und die Zähigkeit (nach Mischung mit Pfropfkautschuk) der Produkte nimmt ab.

Das Molverhältnis der noch nicht umgesetzten Monomeren läßt sich bestimmen, indem man Latexproben aus der reagierenden Mischung entnimmt, auf üblichem Wege, z. B. mit Phenothiazin, abstoppt und die noch vorhandenen freien Monomeren mit Hilfe der head-space-Gaschromatographie quantitativ bestimmt.

Als Maßnahmen zur Einhaltung des erfindungsgemäßen Bereichs des Molverhältnisses sind zu nennen:

Bei Überschreiten des Wertes 1.25 die Erhöhung der Geschwindigkeit der Acrylnitril-Zugabe;

bei Unterschreiten des Wertes 0.7 die Erhöhung der Geschwindigkeit der α-Methylstyrol-Zugabe; da Acrylnitril meistens schneller abreagiert als α-Methylstyrol, ist hier ebenfalls die Erhöhung der Dosiergeschwindigkeit beider Monomerer bzw. deren Gemische angebracht.

Besonders günstige Verhältnisse liegen vor, wenn das Gewichtsverhältnis der beiden Monomeren im Bereich 69 : 31 bis 73 : 27, ganz besonders im Bereich 71 : 29 bis 73 : 27 liegt. In der Regel ist hierbei die Einhaltung des erfindungsgemäßen Molverhältnisses allein durch Anpassung der Zugabegeschwindigkeit des entsprechenden Monomergemisches möglich.

## Das Copolymerisat

Zur Eignung für thermoplastische Mischungen soll das α-Methylstyrol-Harz durchschnittliche Molgewichte zwischen $5 \times 10^4$ und $5 \times 10^5$, vorzugsweise $10^5$ und $2 \times 10^5$ besitzen (Viskosimetrische Bestimmung nach H. Baumann, H. Lange: Angew. Makro. Chem. 2 (1969), S. 16 - 34). Maßnahmen zur Einstellung dieser Molgewichte bestehen in der Auswahl von Initiatorart und -menge sowie Reglerzusatz und sind dem Fachmann bekannt.

Zur Bestimmung des Anteils der Acn-Sequenzen benutzt man die C13-Kernresonanzspektroskopie wie beschrieben von D.J.T. Hill u. a. Macromolecules 1982, 15, 960 - 66. Für die Untersuchungen im Rahmen der vorliegenden Erfindung wurde bei einer Frequenz von 50,3 MHz gemessen und die Verteilung der Triaden SAS, AAS + SAA, AAA aus der Analyse des Nitril-C-Atoms des Acrylnitrils bestimmt [S = α-Methylstyrol, A = Acrylnitril]. Hierbei wurde gefunden, daß der Anteil an AAA-Triaden unter 15 % (bezogen auf die Summe der oben aufgeführten Triaden) betragen muß, damit die Produkte thermisch stabil, und vergilbungsarm werden.

## Herstellung von Formmassen

Die erfindungsgemäß erhaltenen AMS-Harz-Emulsionen können nach bekannten Verfahren weiterverarbeitet werden. Beispielsweise werden sie gegebenenfalls nach Zusatz von Zuschlagstoffen wie Stabilisatoren, Antioxidanzien, Alterungsschutzmitteln mit Latices von Pfropfkautschuken vermischt, koaguliert, gewaschen, entwässert und getrocknet, so daß pulverförmige Polymergemische entstehen. Es ist ebenfalls möglich, die AMS-Harz-Latices alleine in der angegebenen Weise zu fällen und sie danach alleine oder in Mischung mit anderen Polymeren weiter zu verarbeiten. Wärmeformbeständige, nicht verfärbende Thermoplaste kann man beispielsweise herstellen, indem man erfindungsgemäße AMS-Harze anderen thermoplastischen Materialien und/oder Pfropfkautschuken zumischt. Als Mischpartner kommen in Betracht: Pfropfkautschuke von harzbildenden Monomeren, z. B. Styrol, Acrylnitril, -Methylstyrol, Methylmethacrylat auf z. B. Polybutadienkautschuke, Acrylatkautschuke (z. B. vernetztes Polybutylacrylat) und EPDM-Kautschuke (d.h. Ethylen-Propylen-Dien-Monomer-Kautschuke), wobei diese Pfropfkautschuke gegebenenfalls mit Harzpolymerisaten und -Copolymerisaten der genannten Monomeren kombiniert sein können, Polyvinylchlorid, Polycarbonat, Polyamid, aromatische Polyester. Besonders geeignet sind Pfropfkautschuke von Styrol und Acrylnitril auf Polybutadien. Diese Materialien werden beispielsweise hergestellt durch Emulsions-Polymerisation von 70 - 30 Gewichtsteilen der genannten Monomeren in Gegenwart von 30 - 70 Gewichtsteilen mindestens eines Polybutadienlatex, dessen mittlerer Teilchendurchmesser ($d_{50}$) bei 0,05 bis 1,0 μ liegt. (Vgl. beispielsweise DEAS 2 420 358). Der Kautschukanteil der Gesamtmischung liegt dabei in der Regel zwischen 10 und 35 Gewichtsprozent.

Die erfindungsgemäß hergestellten AMS-Harze werden mit den genannten Materialien mit Hilfe üblicher Mischaggregate, z. B. Schnecken, Knetern, Walzenstühlen vermischt und können anschließend durch Spritzguß, Extrusion oder Blasverfahren zu den endgültigen Formkörpern weiter verarbeitet werden. Bei diesen Vorgängen können den Kunststoff-Massen übliche Zuschläge wie Gleitmittel, Entformungsmittel, Farbmittel, Stabilisatoren, Antistatika, Flammschutzmittel, Füll- und Verstärkerstoffe, z. B. Glasfasern, zugefügt werden. Die Formgebung kann auf üblichen Verarbeitungsaggregaten vorgenommen werden und umfaßt z. B. Spritzgußverarbeitung, Plattenextrusion, Warmverformung, Kaltverformung und Kalanderverarbeitung.

**Vergleichsversuche a - d**

Die in der Tabelle I zusammengefaßten Versuche stellen den Stand der Technik dar:

Entsprechend den zitierten Fundstellen wurden AMS-Harze hergestellt und wie folgt weiter verarbeitet:

77,5 Gew.-% Harzpolymerisat und 22,5 Gew.-% eines Pfropfpolymerisats von 50 Gewichtsteilen Styrol und Acrylnitril (im Gewichtsverhältnis 72 : 28) auf 50 Gewichtsteile Polybutadien beide im Form von Latices wurden vermischt, mit Stabilisatoren versetzt, durch Salzzusatz in der Wärme bei pH = 4 - 5 koaguliert, gewaschen, getrocknet und anschließend nach Zusatz eines Gleitmittels geknetet und zu Prüfkörpern verspritzt.

Folgende Prüfungen wurden durchgeführt:

Kerbschlagzähigkeit bei Raumtemperatur $a_k{}^{RT}$ und bei -40°C; $a_k$ -40 nach DIN 53 543; Kugeldurckhärte nach DIN 53 546; Wärmeformbeständigkeit nach Vicat B; Oberflächenqualität qualitativ. Zur Beurteilung des Restmonomergehalts wurde der Umsatz der AMS-Polymerisation angegeben, gemessen durch gravimetrische Analyse des Latex.

**Tabelle I**

| Vergleichs-versuche | Zitat | | Umsatz AMS Polymeri-sation Gew.-% | $a_k{}^{RT}$ [kJ/m²] | $a_k{}^{-40°}$ [kJ/m²] | $H_c$ [MPa] | Vicat B [°C] | Ober-fläche |
|---|---|---|---|---|---|---|---|---|
| a) | Beispiel 1 | EP-A-41 703 | 95 | 8,5 | 1,8 | 114 | 103 | bei 280° |
| b) | Beispiel 2 | EP-A-41 703 | 97 | 7,6 | 3,9 | 119 | 106 | Massetem-peratur starke Schlieren-bildung |
| c) | Beispiel 1 | GB-PS-2 101 143 | 97 | 7,5 | 1,6 | 117 | 114 | glänzend |
| d) | Beispiel 4 | GB-PS-2 101 143 | 96,3 | 8,1 | 1,7 | 116 | 116 | hell |

**Vergleichsversuche e - i, Beispiele 1 - 4**

1. Herstellung der Copolymerisate Die Copolymerisate wurden durch Kaliumpersulfataktivierte Emulsionspolymerisation bei 75°C nach bekannten Methoden mit einem Alkylsulfonat als Emulgator hergestellt. Die Monomeren α-Methylstyrol und Acrylnitril wurden über 6 Stunden zudosiert und das Molverhältnis der nicht umgesetzten Monomeren nach folgenden Zeiten mittels head space-Gaschromatographie ermittelt:

Probe (1): 1 1/2 Std;      Probe (2): 3 Std;
Probe (3): 4 1/2 Std;      Probe (4): 6 Std;

Nach 6 1/2 stündiger Laufzeit wurde eine kleine Menge Kalium-Persulfat nachgesetzt und 2 weitere Stunden bei 75°C ausreagieren lassen. Danach wurde der Umsatz gravimetrisch analysiert. Die Mengen an Regler (tert.-Dodecylmercaptan) und Initiator (Kaliumpersulfat) wurden so abgestimmt, daß das mittlere Molgewicht M̄w der Harzpolymerisate zwischen 70 000 und 90 000 lag.

Die Acn-Sequenzanteile wurden durch Kernresonanzmessung bestimmt.

Die Harzpolymerisate wurden wie bei den Vergleichsversuchen a - d mit dem gleichen Pfropfpolymerisat gemischt, gefällt, getrocknet zu Prüfkörpern verarbeitet und nach den gleichen Methoden geprüft.

Zur Beurteilung der thermischen Vergilbung wurden Plättchen von ca. 4 x 6 cm bei 280° C Massetemperatur gespritzt und die Verfärbungsneigung qualitativ beurteilt.

Tabelle II gibt eine Übersicht über Versuchsdaten und Prüfergebnisse. Sie zeigt, daß nur bei Einhaltung der erfindungsgemäßen Monomerverhältnisse Produkte mit gleichzeitig hohem Umsatz in der Polymerisation sowie guter Verfärbungsfreiheit und Oberflächenqualität resultieren.

**Tabelle II**

| Versuch Beispiel | Einsatz Gew.-Verhältnis der Monomeren Ams : Acn | Molverhältnis der Restmonomeren während der Dosierphase Ams/Acn | | | | End-Umsatz (%) | %-Anteil an AAA Sequenzen | in Abmischung mit Pfroopfpolymerisat | | |
|---|---|---|---|---|---|---|---|---|---|---|
| | | (1) | (2) | (3) | (4) | | | Kerbschlagzähigkeit [kJ/m²] | Vicat-Wert [°C] | Oberflächenqualität und Verfärbung |
| Vgl.-Vers. e) | 68 : 32 | 0,73 | 0,49 | 0,59 | 0,72 | 99 | nicht bestimmt | 9,7 | 115 | dunkelbraun |
| f) | 69 : 31 | 0,80 | 0,58 | 0,55 | 1,09 | 99 | 19,2 | 10,9 | 116 | braun |
| g) | 70 : 30 | 0,64 | 0,55 | 0,67 | 0,85 | 100 | 18,7 | 10,8 | 113 | braun |
| h) | 74 : 26 | 0,813 | 1,36 | 1,61 | 1,80 | 96 | 11,5 | 10,5 | 110 | hell, Störungen durch Schlieren |
| i) | 76 : 24 | 1,102 | 2,08 | 2,55 | 2,79 | 94 | nicht bestimmt | 10,4 | 110 | wie vor |
| Bsp. 1 | 73 : 27 | 1,05 | 1,18 | 0,90 | 1,25 | 98 | 11,1 | 10,6 | 116 | hell, störungsfrei |
| 2 | 72 : 28 | 0,86 | 0,92 | 1,12 | 1,25 | 98 | 7,1 | 10,0 | 119 | hell, störungsfrei |
| 3 | 71 : 29 | 0,93 | 1,19 | 0,98 | 1,11 | 98 | 12,5 | 10,0 | 117 | hell, störungsfrei |

**Patentansprüche**

1. Verfahren zur Herstellung von Copolymerisaten aus 65 bis 75 Gew.-% α-Methylstyrol und 35 bis 25 Gew.-% Acrylnitril durch radikalische Emulsionspolymerisation, bei der die Monomeren während der Polymerisation zudosiert werden, dadurch gekennzeichnet, daß das Verhältnis

mol α-Methylstyrol/mol Acrylnitril

der im Reaktionsgemisch befindlichen, nicht umgesetzten Monomeren während der Dosierphase zwischen 0,7 und 1,25 gehalten wird.

2. Verwendung von gemäß Anspruch 1 hergestellten Copolymerisaten zur Herstellung thermoplastischer Formmassen.

3. Verwendung von gemäß Anspruch 1 hergestellten Copolymerisaten zur Herstellung von ABS-Formmassen.

**Claims**

1. A process for the production of copolymers of 65 to 75 % by weight α-methyl styrene and 35 to 25 % by weight acrylonitrile by radical emulsion polymerization, in which the monomers are added throughout the polymerization, characterized in that the ratio

mol α-methyl styrene : mol acrylonitrile

of the unreacted monomers in the reaction mixture is kept between 0.7 and 1.25 during the addition phase.

2. The use of the copolymers produced by the process claimed in claim 1 for the production of thermoplastic molding compounds.

3. The use of copolymers produced by the process claimed in claim 1 for the production of ABS molding compounds.

**EP 0 172 527 B1**

**Revendications**

1. Procédé de production de copolymérisats de 65 à 75 % en poids d'α-méthylstyrène et de 35 à 25 % en poids d'acrylonitrile par polymérisation radicalaire en émulsion, dans laquelle les monomères sont ajoutés pendant la polymérisation, caractérisé en ce que le rapport

moles d'α-méthylstyrène/moles d'acrylonitrile

des monoméres n'ayant pas réagi se trouvant dans le mélange réactionnel est maintenu entre 0,7 et 1,25 pendant la phase d'addition.

2. Utilisation de copolymérisats préparés selon la revendication 1 pour l'obtention de mélanges à mouler thermoplastiques.

3. Utilisation de copolymérisats préparés conformément à la revendication 1 pour l'obtention de mélanges à mouler ABS.